# FASCICULE DE BREVET EUROPEEN

(11) **EP 0 636 464 B1**
(45) Date de publication et mention de la délivrance du brevet: **01.03.2000**
(21) Numéro de dépôt: 94401735.9
(22) Date de dépôt: 28.07.1994
(51) Int. Cl.: B29C 45/14, B29C 45/16

(54) **Procédé d'insertion délimitée d'un décor dans un support thermoplastique**
Verfahren zum begrenzten Einfügen eines Dekors in einem thermoplastischen Substrat
Method for bounded incorporation of a decoration in a thermoplastic substrate

(30) Priorité: 30.07.1993 FR 9309399
(43) Date de publication de la demande: 01.02.1995
(73) Titulaire: EUROSTYLE (S.A.), F-91370 Verrières le Buisson (FR)
(72) Inventeur: Boulbon, Jack, F-36130 Deols (FR)
(74) Mandataire: Viard, Jean

(56) Documents cités:
- EP-A- 0 332 899
- EP-A- 0 448 876
- EP-A- 0 517 615
- FR-A- 1 360 514
- GB-A- 2 171 048
- US-A- 4 130 622

## Description

La présente invention a pour objet un procédé d'insertion délimitée d'un décor dans un support thermoplastique lors d'un surmoulage basse pression, et en particulier, mais non exclusivement, le rembordement de telle pièces décorées ou gainées.

On a décrit dans le brevet FR-A-2 702 990, sur lequel repose le préambule de la revendication 1, un procédé de décor d'un support thermoplastique par surmoulage basse pression selon lequel :
- on introduit la matière thermoplastique à l'état fondu dans le moule au-dessous du décor ;
- on injecte la matière à basse pression à travers au moins une buse alors que l'on injecte simultanément un gaz inerte basse pression au moyen de buse travaillant séquentiellement pour orienter la matière fondue dans les endroits désirés du moule.

Le rembordement, ou recouvrement des bords par le décor, peut être effectué dans le moule mais il nécessite, la plupart du temps, une opération ultérieure de reprise à la main.

Dans la technique traditionnelle, le décor est placé du côté de la matrice du moule, puis la matière est injectée à l'état fondu contre l'envers du décor (côté poinçon). C'est la pression d'injection qui plaque le décor dans la cavité de la matrice. Le décor épouse ainsi parfaitement la cavité de la matrice mais déborde fréquemment de celle-ci. Par conséquent, il est nécessaire de couper les bords du décor après démoulage. Et l'humidité peut passer de la face arrière à la face avant décorée par capillarité dans le décor.

La présente invention a pour objet de pallier cet inconvénient et de supprimer l'opération de reprise manuelle. A cet effet, le décor est inséré dans la matière thermoplastique dans des zones délimitées très précises de finition ou de semi finition pour éviter toute reprise supplémentaire.
Il est déjà connu de surmouler de la matière thermoplastique sur de petites pièces en toile ou sur des grilles dans un but de renforcement.

EP-A-332 889 concerne le moulage par injection d'un diaphragme en toile. Sur deux circonférences sont formés des bourrelets de matière thermoplastique, l'ensemble étant ensuite découpé à l'intérieur de la plus petite des circonférences et à l'extérieur de la plus grande.
EP-A-448 876 concerne une cartouche de filtrage obtenu par surmoulage du filtre en formant un cadre extérieur en matière synthétique. Au niveau du cadre, les fibres du filtre sont fondues et il n'y a pas de passage de la matière à travers les mailles.
FR-A-1 360 514 décrit un procédé de renforcement d'une pièce d'étoffe perméable à une résine synthétique pour former, par exemple, un oeillet.
US-A-4 130 622 décrit également un filtre cylindrique dans lequel sont formées des nervures périphériques longitudinales. La matière plastique entoure et lie les extrémités adjacentes du filtre.

La présente invention a pour objet de fournir un procédé de rembordement permettant l'obtention de pièces décorées de grande surface, en matière thermoplastique, dont les bords soient parfaitement étanches.

Selon l'invention, le procédé d'insertion délimitée d'un décor dans un support thermoplastique rigide par surmoulage basse pression du décor textile disposé dans un moule comprenant une matrice et un poinçon, le décor étant disposé contre la matrice du moule et plaqué contre celle-ci par la pression d'injection, est caractérisé par la partie caractérisante de la revendication 1.

Des modes particuliers de réalisation sont définis dans les revendications 2 à 4.

Les revendications 3 et 4 visent en particulier le surmoulage d'une pièce adjacente à la première et reliée par liaison chimique à celle-ci.

La mise en place du décor selon l'invention permet, dans certaines zones, de faire passer le matériau thermoplastique à travers le décor et d'obtenir un ensemble surmoulé dans lequel les composants sont parfaitement intégrés et étanches. Dans tous les cas, le bord du textile est inséré dans la matière plastique dans les zones de rembordement, avec une découpe automatique du textile ou décor dans le moule.

La pièce obtenue peut être utilisée telle quelle avec décor local ou réinsérée dans un autre moule afin de subir un surmoulage supplémentaire pour obtenir un assemblage de plusieurs pièces, souple dur, bi-tons ou tout autre arrangement.

D'autres caractéristiques et avantages de l'invention apparaîtrons au cours de la description qui va suivre, de modes particuliers de réalisation de l'invention ainsi que des variantes n'entrant pas dans le cadre de l'invention, donnés uniquement à titre d'exemples non limitatifs, en regard des dessins qui représentent :
- La Figure 1, un schéma de principe de l'invention ;
- La Figure 2, une vue d'un détail de la figure 1 à échelle agrandie ;
- La Figure 3, une vue d'un bord de pièce selon l'invention;
- La Figure 4, une variante n'entrant pas dans le cadre de l'invention, faisant appel à des cales mobiles.
- La Figure 5, une vue d'un détail de la figure 4,
- La Figure 6, un rembordement à 180° avec insertion du textile dans le plastique ;
- La Figure 7, un schéma montrant la liaison par surmoulage de deux pièces thermoplastiques rigides selon l'invention;
- La Figure 8, une figure montrant le surmoulage d'un joint à lèvre selon l'invention;
- La Figure 9, le surmoulage d'un joint creux avec gaz selon l'invention;
- La Figure 10, une autre variante n'entrant pas dans le cadre de l'invention.

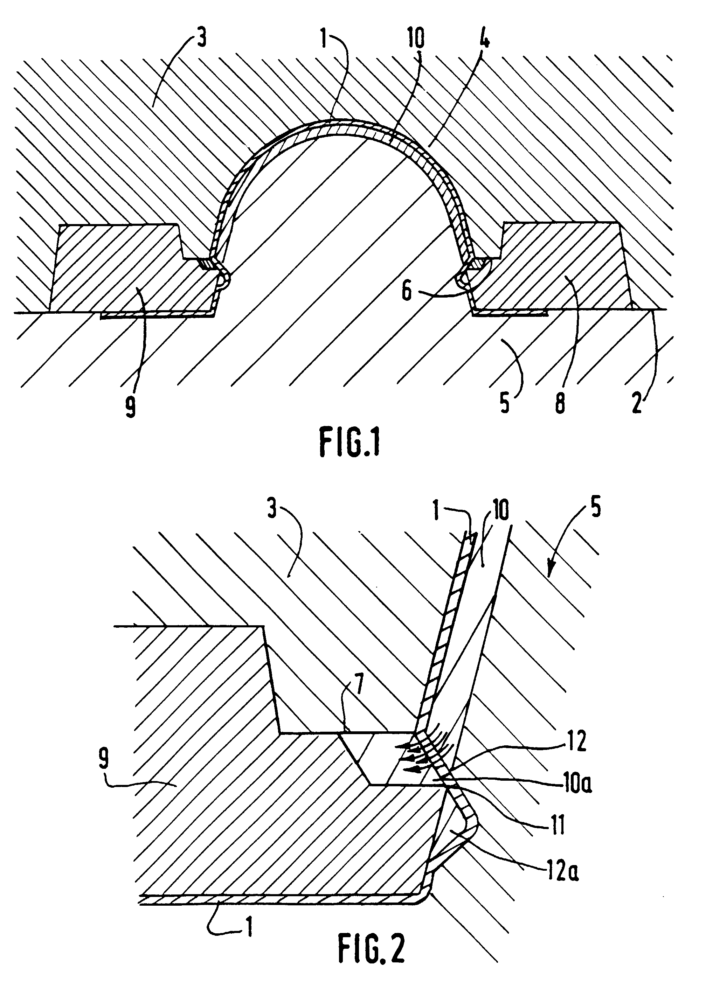

La figure 1 est un schéma en coupe verticale montrant le principe du rembordement intégré. Le décor 1 est pincé dans le plan de joint 2 de manière à être tendu, à l'intérieur de la matrice 3, au cours de l'injection. Le décor est tendu dans la cavité 4 de la matrice 3 avec impossibilité d'épouser les angles vifs des parties latérales 6 et 7, c'est à dire de pénétrer dans la cavité 10a, (FIG.2), par exemple. Le décor 1 est dirigé autour du profil de cales 8 et 9 pour passer devant l'angle vif 12 et se loger dans la cavité 12a lors de l'arrivée de la matière thermoplastique sous pression, autour du poinçon 5, dans les zones choisies. L'injection pousse alors le thermoplastique fondu à travers les porosités du décor, comme cela apparaît mieux sur la figure 2, entre l'angle vif 12 du poinçon 5 et l'angle vif 11 des cales 8, 9.

Après l'injection, le moule s'ouvre, les cales mobiles restant plaquées sur la matrice 3. Le décor est sectionné mécaniquement pendant la course d'ouverture comme par un outil de découpe puisqu'il est emprisonné, d'un côté contre l'angle vif 12 du poinçon 5 et, de l'autre côté, contre l'angle vif 11 de la cale 9.

L'ouverture du moule se poursuit normalement comme lors d'une éjection traditionnelle. Selon le cas, il se peut que les cales mobiles 8, 9 se désolidarisent de la matrice pour rester sur le poinçon durant la phase d'ouverture. On obtient, par une éjection automatique, une pièce finie avec rembordement et insertion du décor dans le support thermoplastique. La chute de l'excédent de décor, y compris le petit profil de plastique moulé dans la cavité 12a (FIG.2) du poinçon, est extraite séparément. Les cales mobiles 8 et 9 sont alors replaquées contre la matrice 3 pour qu'un nouveau cycle de décoration puisse recommencer.

Le procédé qui vient d'être décrit permet de produire en une seule opération une pièce thermoplastique revêtue d'un décor intégré ne nécessitant pas de reprise pour le rembordement à l'intérieur de la pièce. La liaison entre les différents matériaux est parfaitement étanche. Le transfert d'humidité par capillarité (effet de mèche) est supprimé alors que dans le cas d'un rembordement traditionnel l'humidité peut passer de la partie arrière de la pièce jusqu'à la face avant de celle-ci.

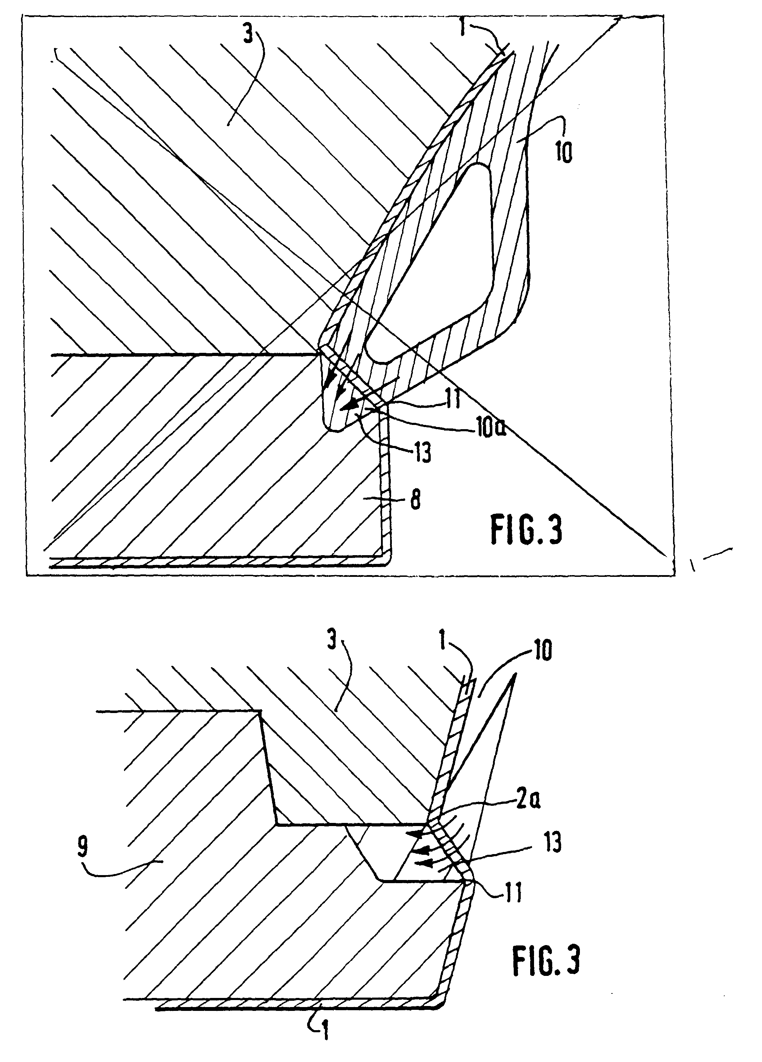

Sur la figure 3 où les mêmes références désignent les mêmes éléments, la partie latérale de la pièce injectée 10 comporte un bec qui a traversé le décor 1. Le bec plastique est aligné avéc le plan de joint du moule. Le décor est \ découpé mécaniquement dans le moule comme décrit précédemment. Le décor 1, tendu au-dessus de la cavité 10a, épouse la forme de la matrice 3 et de la cale 9.

La figure 7 schématise la liaison par surmoulage de deux pièces (10, 20 et 10, 20a) en matière plastique rigide, dont au moins l'une, 10, est recouverte d'un décor 1.

Dans une première étape, la pièce 10 est surmoulée avec un décor 1 dans un premier moule comme indiqué précédemment. La pièce comporte un centrage périphérique 17 pour son positionnement précis dans un second moule. Dans une seconde étape, la pièce 10 obtenue est positionnée dans la cavité du second moule. La matière thermoplastique, à l'état fondu, est injectée dans la cavité du second moule. La liaison entre les deux pièces 10 et 20 est obtenue par soudure chimique, le long de la surface 16 et la partie de liaison est suffisamment dimensionnée pour conserver une température permettant de réchauffer le profil correspondant de la pièce 10 et d'assurer la liaison.

Il est ainsi possible d'obtenir une ensemble homogène et solidaire des pièces multiples. Le décor 1 peut être constitué d'un textile avec ou sans mousse ou d'une moquette. Grâce à ce procédé, la pièce 20a (Fig.7) peut également être revêtue d'un décor 1 b identique ou différent du premier décor 1 qui est, au préalable, tendu dans le moule. Ce procédé permet l'insertion de plusieurs décors par réalisation d'opérations successives.

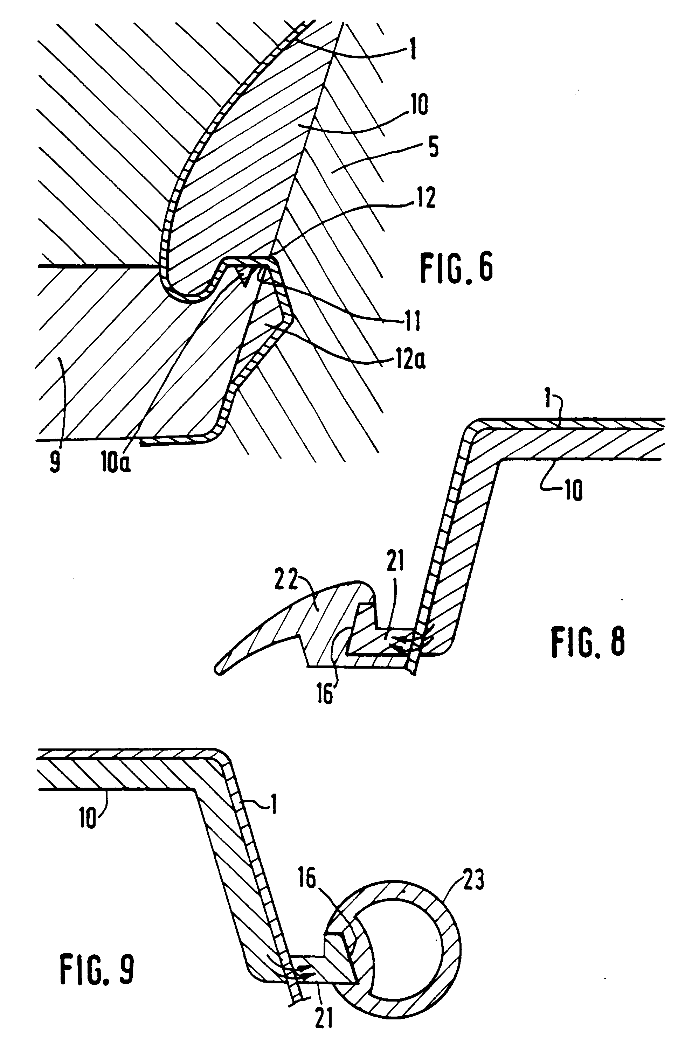

Les figures 8 et 9 montrent deux autres exemples d'application du procédé ci-dessus.

Sur la figure 8, un joint de matériau souple 22 est rapporté lors d'un deuxième moulage sur une autre presse ou dans un même cycle sur une presse bi-matières. Le profil 21 de liaison des deux matériaux est prévu sur la pièce 10 déjà revêtue de son décor 1. Le joint 22 souple adhère, par liaison chimique le long de la surface 16. La figure 9, représente le surmoulage d'un joint souple 23 évidé par injection de gaz, à section circulaire ou autre.

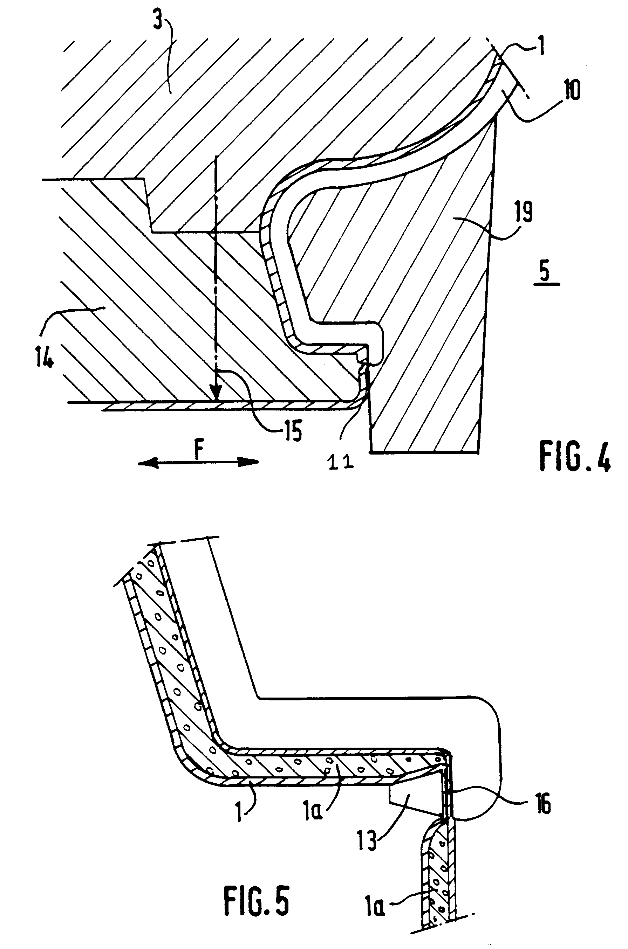

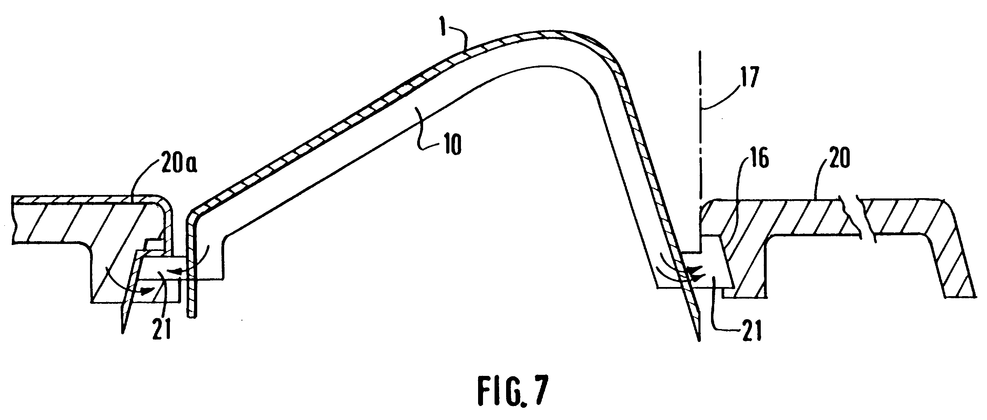

Des variantes n'entrant pas dans le cadre de l'invention sont représentées sur les figures 4 à 6 et 10.

Sur la figure 4, le profil désiré est obtenu à l'aide d'une cale mobile 19 incluse dans le poinçon 5 et d'un coulisseau 14, monté dans la matrice 3, pouvant être déplacé selon la direction indiquée par la flèche F. Le moule étant ouvert, le décor 1 est disposé dans la matrice 3, le coulisseau 14 étant en position rétractée. La matrice 3 est alors rapprochée du poinçon 5 et est amenée à une distance de 0,5 à 1 mm de celui-ci. Avant fermeture complète, le décor 1 est plaqué contre le poinçon 5 à l'aide de poussoirs à ressorts 15 symbolisés par leur axe. Le coulisseau 14 est alors fermé hydrauliquement et le décor 1 est plaqué sur la cale 19. Le moule est ensuite verrouillé.

Lors de l'injection, le décor est appliqué contre le fond de la matrice 3 par la pression de la matière plastique injectée. Au cours de cette opération, (Fig.5), le bec 13 de plastique traverse le décor 1 à travers les porosités de celui-ci, assurant ainsi une liaison homogène étanche des différents matériaux intégrés. Comme cela apparaît dans la zone 16, le décor 1 est comprimé et imprégné de plastique ce qui évite l'effet de mèche signalé ci-dessus. Dans l'exemple représenté, le décor est constitué de deux couches 1 de textile entre lesquelles est disposée une couche 1 a de mousse.

La figure 6 représente un rembordement à 180°, le plastique 13 pénètre dans la cavité triangulaire 10a à travers le décor 1 pendant l'injection. Cette liaison du décor rendu solidaire de la pièce plastique par le bec 13, évite l'effet de mèche. L'excédent du décor 1 est coupé mécaniquement, comme expliqué plus haut (FIG.2), lors de l'ouverture du moule, par les arêtes tranchantes 11,12.

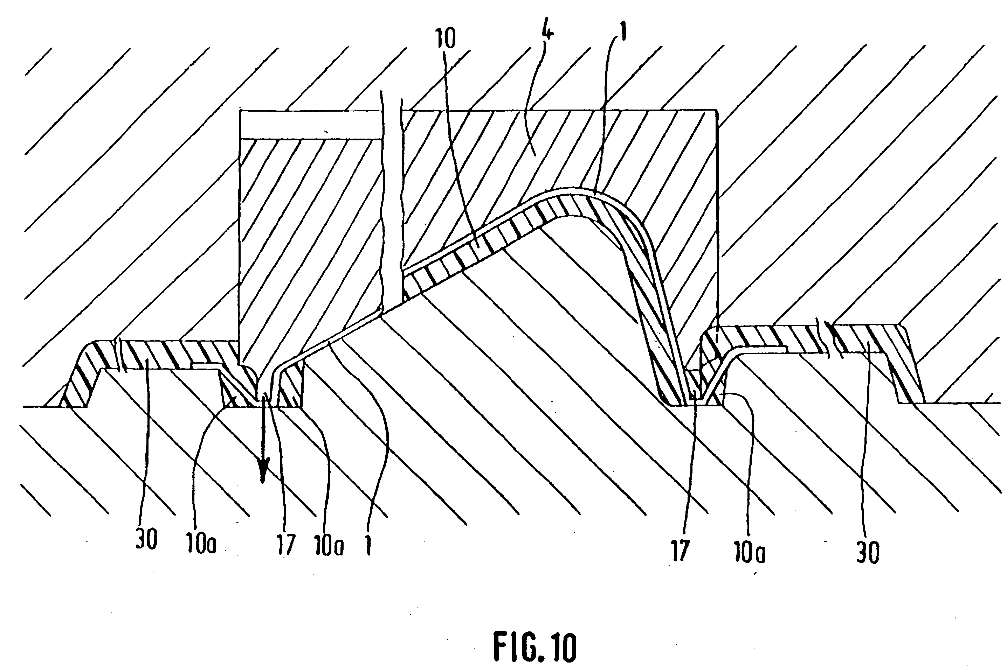

La figure 10, représente un autre mode de mise en oeuvre dans lequel, comme dans la figure 7, le décor est inséré localement. Dans ce mode de réalisation on retrouve, comme sur les figures précédentes le poinçon 5, la matrice 3 à l'intérieur de laquelle est montée mobile en translation une pièce 4 dans laquelle est formée la cavité de moulage. Dans ce mode de réalisation, le décor 1 est prédécoupé aux dimensions voulues et disposé dans le moule comme représenté sur la partie gauche de la figure 10 qui représente la première phase de réalisation d'une pièce. Le décor 1 est centré dans le moule par un système de picotage référencé 17.

Après insertion du décor entre le poinçon 5 et la partie mobile 4 de la matrice 3, le moule est fermé et la pièce 4 est appliquée contre le poinçon 5 par des moyens hydrauliques (non représentés) en pinçant le décor contre le poinçon 5 comme cela apparaît sur la partie gauche de la figure. On obtient ainsi une fermeture étanche entre le cordon ou centrage périphérique.

Après fermeture du moule, la phase I consiste en l'injection d'une pièce périphérique 30 sous basse pression et séquentiellement comme décrit dans le brevet précité. Cette injection est effectuée à partir du poinçon 5 par-dessus le décor et à l'extérieur de la pièce mobile 4. La partie excédentaire du décor est ainsi incluse dans la partie inférieure de la pièce thermoplastique 30.

Au cours de la phase II du procédé, (représentée sur la partie droite de la figure 10), la pièce 4 remonte à l'intérieur de la matrice 3 ce qui libère un espace d'épaisseur déterminée. Une seconde injection est alors effectuée, au-dessous du décor, cette seconde injection plaquant le décor contre la cavité formée dans la pièce 4. La matière plastique injectée au cours de cette seconde injection peut être de même nature que la matière introduite dans le moule lors de la première injection. Mais elle peut aussi être différente à condition d'être chimiquement compatible avec la première matière. Au cours des phases I et II, la matière thermoplastique traverse le décor par capillarité et l'intégration des parties 10 et 30 est obtenue par liaison chimique entre les deux parties plastiques.

Les décors peuvent être constitués comme indiqué précédemment et dans le brevet précité par des textiles recouverts ou non de mousse synthétique, par de la moquette ou par du cuir ou tout autre décor. Il est également possible par le procédé selon l'invention d'imiter un capitonnage.

## Revendications

1. Procédé d'insertion délimitée d'un décor dans un support thermoplastique rigide (10) par surmoulage basse pression du décor textile disposé dans un moule comprenant une matrice (3) et un poinçon (5), le décor étant disposé contre la matrice (3) du moule et plaqué contre celle-ci par la pression d'injection caractérisé en ce que la matrice (3) comprend des cales (8, 9) présentant chacune une arête vive (11) en saillie, la matrice (3) formant avec une cale (9) une cavité (10a) au-dessus de laquelle est tendu le décor (1), la matière injectée (10) pénétrant lors de l'injection dans la cavité (10a) à travers le décor (1) pour intégrer le décor dans la matière injectée, le décor (1) étant coupé sur le bord tourné vers l'extérieur de la cavité (10a) par éloignement de la matrice (3) et du poinçon (5).

2. Procédé selon la revendication 1, caractérisé en ce que le poinçon (5) présente au moins une seconde cavité (12a) disposée au-dessous de ladite cavité (10a) formée par la matrice (3) et la cale (9), les deux cavités étant délimitées par ladite arête vive (11) de ladite cale (9) et une seconde arête vive (12) située au-dessus de ladite arête vive (11) de ladite cale (9) lorsque le moule est fermé, les arêtes (11, 12) sectionnant l'excédent du décor lors de l'ouverture du moule au niveau du bord extérieur de la cavité (10a) par éloignement de la matrice (3) et du poinçon (5).

3. Procédé selon l'une des revendications 1 ou 2, caractérisé en ce qu'il comprend une seconde étape de surmoulage, dans un second moule, la matière injectée (20, 20a) au cours de la seconde étape étant chimiquement liée à la première pièce (10) par l'un des bords (16) de celle-ci.

4. Procédé selon l'une des revendications 1 ou 2, caractérisé en ce que la pièce thermoplastique est réalisée en deux étapes sans ouverture du moule:
- au cours de la première étape, la partie périphérique (30) est injectée par-dessous le décor (1) en intégrant les bords de celui-ci, par passage de la matière à travers le décor ;
- au cours de la seconde étape, la cavité (4) de la matrice (3) et le décor (1) sont éloignés du poinçon (5) et une nouvelle injection est effectuée, les deux parties injectées étant reliées par liaison chimique assurant l'étanchéité sans effet de mèche et sans transfert d'humidité.

## Patentansprüche

1. Verfahren zum begrenzten Einfügen eines Dekors in einem starren thermoplastischen Substrat (10) durch Niederdruck-Aufspritzformen des in eine Form mit einem Formunterteil (3) und einem Formoberteil (5) eingebrachten textilen Dekors, wobei das textile Dekor am Formunterteil (3) der Form anliegt und durch den Einspritzdruck an dieses angepreßt wird, dadurch gekennzeichnet, daß das Formunterteil (3) Füllstücke (8, 9) mit jeweils einer vorspringenden scharfen Kante (11) aufweist und das Formunterteil (3) mit einem Füllstück (9) einen Hohlraum (10a) ausbildet, über den das Dekor gespannt ist, wobei die Spritzmasse (10) während des Einspritzens durch das Dekor (1) hindurch zum Einbetten des Dekors in die Spritzmasse in den Hohlraum (10a) eindringt und das Dekor (1) beim Auseinanderfahren des Formunterteils (3) und des Formoberteils (5) an der vom Hohlraum (10a) nach außen umgelegten Kante abgeschnitten wird.

2. Verfahren nach Anspruch 1, dadurch gekennzeichnet, daß das Formoberteil (5) mindestens einen zweiten, unterhalb des durch das Formunterteil (3) und das Füllstück (9) gebildeten Hohlraums (10a) befindlichen Hohlraum (12a) aufweist, wobei die beiden Hohlräume bei geschlossener Form durch die scharfe Kante (11) des Füllstücks (9) und eine zweite, oberhalb der scharfen Kante (11) des Füllstücks (9) befindliche scharfe Kante (12) begrenzt sind und die Kanten (11, 12) den überschüssigen Teil des Dekors beim Öffnen der Form durch Auseinanderfahren des Formunterteils (3) und des Formoberteils (5) im Bereich der Außenkante des Hohlraums (10a) abtrennen.

3. Verfahren nach einem der Ansprüche 1 oder 2, dadurch gekennzeichnet, daß es einen zweiten Aufspritzformungsschritt in einer zweiten Form umfaßt, wobei sich die beim zweiten Schritt eingespritzte Masse (20, 20a) mit dem ersten Teil (10) an einem seiner Ränder (16) chemisch verbindet.

4. Verfahren nach einem der Ansprüche 1 oder 2, dadurch gekennzeichnet, daß das thermoplastische Teil ohne Öffnen der Form in zwei Schritten hergestellt wird, wobei
- im ersten Schritt der Umfangsbereich (30) unterhalb des Dekors (1) mit Einbeziehung seiner Ränder unter Durchtritt der Masse durch das Dekor hindurch gespritzt wird und
- im zweiten Schritt der Hohlraum (4) des Formunterteils (3) und das Dekor (1) in einen Abstand zum Formoberteil (5) gebracht werden und ein erneuter Einspritzvorgang durchgeführt wird, wobei sich die beiden eingespritzten Teile durch chemische Verbindung miteinander verbinden und dadurch Dichtigkeit hergestellt wird, ohne Dochtwirkung und ohne Feuchtigkeitsdurchgang.

## Claims

1. A method of inserting a defined piece of decoration in a rigid thermoplastic support (10) by low-pressure overmolding of the textile decoration placed in a mold that comprises a die (3) and a punch (5), the decoration being placed against the die (3) of the mold and being pressed thereagainst by the injection pressure, the method being characterized in that the die (3) has spacers (8, 9) each presenting a sharp projecting edge (11), the die (3) cooperating with a spacer (9) to form a cavity (10a) over which the decoration (1 ) is tensioned, the injected material (10) penetrating during injection into the cavity (10a) through the decoration (1) so as to integrate the decoration in the injected material, the decoration (1) being cut along its edge facing the outside of the cavity (10a) by the die (3) and the punch (5) moving apart.

2. A method accordion to claim 1, characterized in that the punch (5) has at least one second cavity (12a) disposed beneath said cavity (10a) formed by the die (3) and the spacer (9), the two cavities being defined by said sharp edge (11) of said spacer (9) and a second sharp edge (12) situated above said sharp edge (12) of said spacer (9) when the mold is closed, the edges (11, 12) acting during opening of the mold to cut off excess decoration at the outside edge of the cavity (10a) by the die (3) and the punch (5) moving apart.

3. A method according to claim 1 or 2, characterized in that it includes a second overmolding step in a second mold, the material injected (20, 20a) during the second step being chemically bonded to the first piece (10) via one of the margins (16) thereof.

4. A method according to claim 1 or 2, characterized in that the thermoplastic piece is made in two steps without opening the mold:
· during the first step, the peripheral portion (30) is injected over the decoration (1) and integrates the margins thereof by the material passing through the decoration; and
· during the second step the cavity (4) of the die (3) and the decoration (1 ) are moved away from the punch (5) and injection is performed again, the two injected portions being connected together by chemical bonding, thereby providing sealing without a wick effect and without transferring moisture.
